Europäisches Patentamt

European Patent Office

Office européen des brevets

(19)

(11) Publication number: **0 067 524**
**B1**

(12) **EUROPEAN PATENT SPECIFICATION**

(45) Date of publication of patent specification: **21.01.87**

(51) Int. Cl.⁴: **F 16 B 2/24**, H 04 M 1/02

(21) Application number: **82302409.6**

(22) Date of filing: **12.05.82**

(54) **Fastener for assembling two hollow members.**

(30) Priority: **12.06.81 GB 8118220**

(43) Date of publication of application:
**22.12.82 Bulletin 82/51**

(45) Publication of the grant of the patent:
**21.01.87 Bulletin 87/04**

(84) Designated Contracting States:
**AT BE DE NL**

(56) References cited:
**DE-A-1 500 889**
**DE-A-1 575 242**
**DE-C- 835 535**
**DE-U-1 891 680**
**FR-E- 86 990**
**GB-A-1 277 607**
**US-A-2 353 796**
**US-A-2 605 926**
**US-A-2 698 472**
**US-A-2 839 805**
**US-A-2 947 048**
**US-A-3 194 623**
**US-A-4 220 252**

(73) Proprietor: **PLESSEY OVERSEAS LIMITED**
**Vicarage Lane**
**Ilford Essex IG1 4AQ (GB)**

(72) Inventor: **Hickling, David John**
**42 Holkham Avenue**
**Chilwell Nottingham (GB)**

(74) Representative: **Sorenti, Gino et al**
**Intellectual Property Department The Plessey**
**Company plc 2-60 Vicarage Lane**
**Ilford Essex IG1 4AQ (GB)**

Courier Press, Leamington Spa, England.

## Description

### Technical Field

The present invention concerns an enclosure and fastener, for example an enclosure such as a subscriber telephone apparatus comprising two hollow shell members assembled together.

It is a problem providing concealed fastening for such apparatus. A solution to this problem is desired because external fastening arrangements would spoil or otherwise mar the outward appearance of such a telephone.

### Background Art

Enclosures with two part fasteners are known, see for example US—A—4,220,252 which discloses an enclosure having two parts connected about a hinge with mouldings in each half to provide more structural security to the hinge and a simple compression fastener to secure the enclosure, the mouldings taking the form of an indentation and an L-shaped projection which enters the indentation on closure of the enclosure.

### Disclosure of Invention

It is an object of the present invention to provide a hollow enclosure, the two member parts of which are held together by means of concealed fastener, deliberate action being required to separate the two member parts.

Accordingly the present invention provides an enclosure having a hollow base member, and a hollow cover member an abutment joint between these two hollow members, two fastener members being attached separately to each respective hollow member such that when the hollow members abut through the abutment joint the hollow members are substantially held together by the fastener members and the hollow members can only be separated by pivoting about a pivoting axis, characterised in that the fastener members are an adapted U-shaped spring clip attached to the inside of cover member and a flange with an orifice therein attached to the inside of base member, the clip having a first substantially straight leg through which the clip is attached to the cover member to be adjacent and substantially perpendicular to the abutment joint with a second leg extending into the hollow cover member, the second leg (20) having a V-shaped portion formed therein to enter the orifice of the flange, the flange is fixed in the base member to be substantially perpendicular to the abutment joint and at a position displaced from that joint, whereby on assembling both hollow members the V-shaped portion of the second leg is forced into the orifice giving a residual force reaction between the hollow members, whereby the hollow members are substantially held together when further securing means are provided to prevent pivoting of the hollow members, these securing means being arranged on the enclosure side opposite to the pivoting axis.

The orifice may be formed in a detachable web or other member removably mounted in the enclosure member.

### Brief Introduction of the Drawings

An embodiment of the invention will now be described by way of example only with reference to the accompanying drawings, in which:—

Figure 1 is a cross-sectional view through a portion of an enclosure having a fastener mounted in accordance with the present invention,

Figure 2 is a cross-sectional view showing the fastener in a partially engaged position and,

Figure 3 is a cross-sectional view through the enclosure showing the fastener in a disengaged position.

### Description of the Preferred Embodiment

The figures show a portion of an enclosure having a lower base part 10 and an upper cover part 12 which may be any type of apparatus such as, for example a subscribers telephone apparatus. The base 10 is adapted to contain the basic mechanism and circuitry of the telephone which is mounted on a separate chassis, part 14 of which is shown, the chassis being suitably secured inside the base 10. The telephone dial or push button module, handset contacts, etc. are adapted to project through the holes formed in the cover 12, the joint 13 between the cover and the base being positioned about half-way up the body and hence being normally visible.

The base and the cover are secured together at one end by a suitable nut and bolt arrangement (not shown) and at the other end by a fastener according to the invention.

The fastener comprises a spring steel strip 16 bent into a substantially U-shape with one straight leg 18 and one leg 20 formed substantially into a V-shape. The straight leg 18 is adapted to be secured to the inside of the cover 12 either by bonding, fitting into slots or any other suitable means so that the apex 22 of the V-shape formed in the other leg 20 projects inwardly of the cover 12.

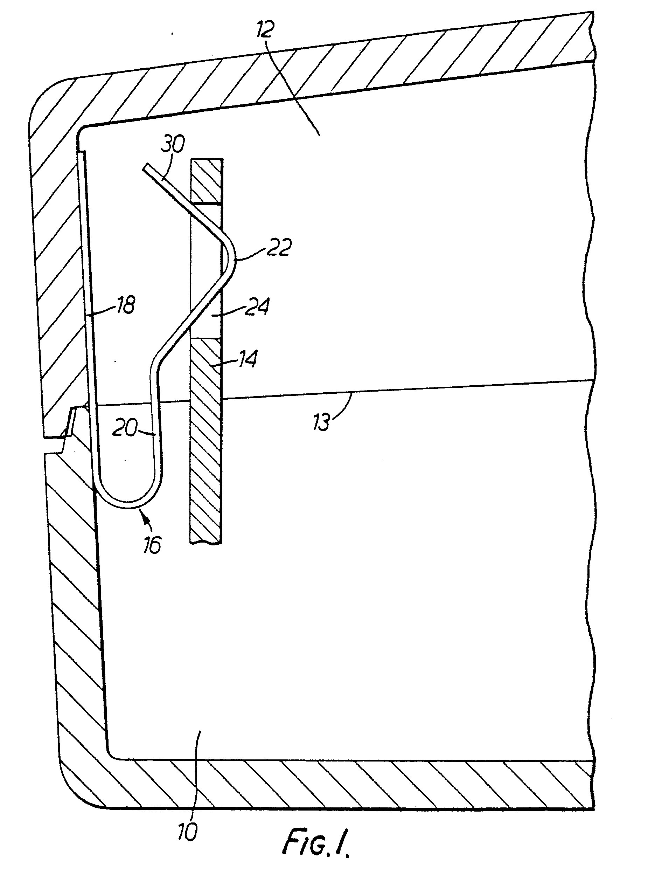

A hole 24 is formed conveniently in the chassis 14 which is spaced from the end of the base 10 so that the V-shaped leg of the spring steel strip 16 projects into it. In the position shown in Figure 1 the leg 20 is urged towards the other leg 18 and the V-shaped leg 20 is urged downwards by the reaction between the top edge of the hole 24 and the end 30 of the leg 20. This arrangement thus forces the cover 12 down on to the base 10 and the cover 12 cannot be vertically removed from the base 10 unless an excessive force is applied upwardly to the cover 12 such as by prising a suitably thin tool into the joint 13 which would normally result in breakage or deformation of the cover and/or the base.

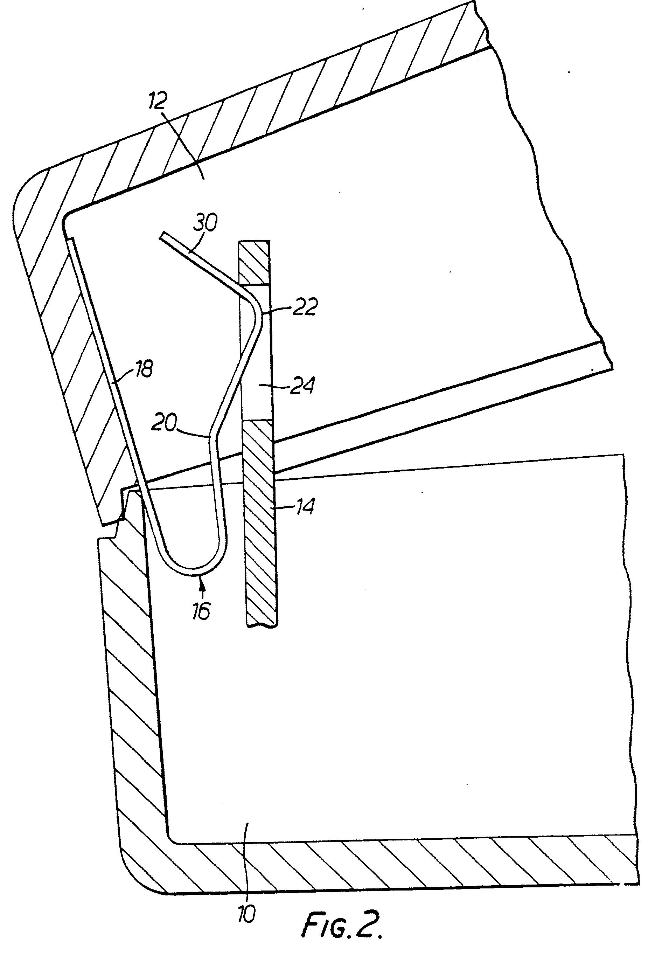

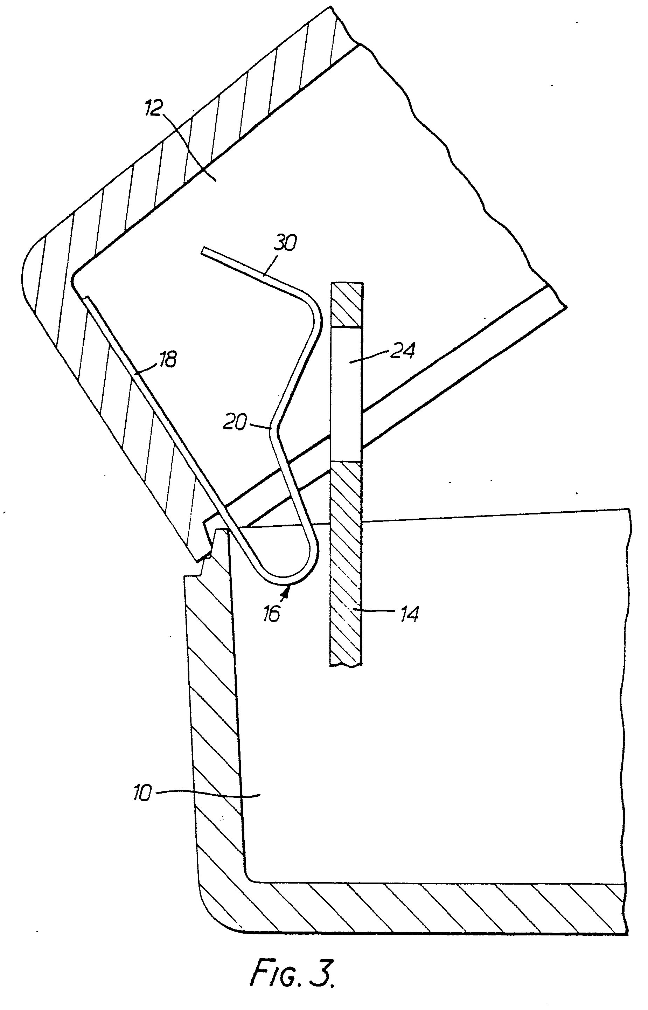

To remove the cover 12, the nut and bolt assembly is removed and the cover pivoted along the joint between the cover 12 and the base 10 as illustrated in Figure 2. This pivoting movement causes the end 30 of the leg 20 to slide out of the hole 24 in the chassis 14 until the whole of the V-shaped leg 20 is withdrawn from the hole 24 (see Figure 3). The cover 12 can now be simply lifted off the base 10.

Fitting the cover 12 is the same procedure in reverse. The cover 12 is placed at the angle shown in Figure 3 so that the spring 16 just clears the chassis 14. As the cover is pivoted downwards the V-shaped leg 20 of the spring 16 enters the hole 24 and the end 30 slides over the top edge of the hole 24 until the position shown in Figure 1 is reached.

The fastener is thus hidden inside the hollow body and does not interfere with the external styling of the body. Furthermore the fastener is secure in that it cannot be released without the pivoting action, and all that is required in a reasonably symmetrical shaped body is a single nut and bolt at the opposite end to the fastener. Such a nut and bolt could easily be hidden under a name plate or other cover member.

### Claims

1. An enclosure having a hollow base member (10) and a hollow cover member (12), an abutment joint (13) between these two hollow members (10, 12), two fastener members (14, 16) being attached separately to each respective hollow member (10, 12) such that when the hollow members (10, 12) abut through the abutment joint (13) the hollow members (10, 12) are substantially held together by the fastener members (14, 16) and the hollow members (10, 12) can only be separated by pivoting about a pivoting axis, characterised in that the fastener members (14, 16) are an adapted U-shaped spring clip (16) attached to the inside of cover member (12) and a flange (14) with an orifice (24) therein attached to the inside of base memeber (10), the clip (16) having a first substantially straight leg (18) through which the clip (16) is attached to the cover member (12) to be adjacent and substantially perpendicular to the abutment joint (13) with a second leg (20) extending into the hollow cover member (12), the second leg (20) having a V-shaped portion (30) formed therein to enter the orifice (24) of the flange (14), the flange (14) is fixed in the base member (10) to be substantially perpendicular to the abutment joint (13) and at a position displaced from that joint, whereby on assembling both hollow members the V-shaped portion (30) of the second leg (20) is forced into the orifice (24) giving a residual force reaction between the hollow members (10, 12), whereby the hollow members are substantially held together when further securing means are provided to prevent pivoting of the hollow members (10, 12), these securing means being arranged at the enclosure side opposite to the pivoting axis.

2. An enclosure, as claimed in claim 1, wherein the flange (14) is detachable and is removably mounted relative to one of the two hollow members (10, 12).

3. An enclosure, as claimed in any one of the preceding claims, wherein the securing means comprises a nut and bolt assembly.

### Patentansprüche

1. Gehäuse, das einen hohlen Unterteil (10) und einen hohlen Deckerteil (12), eine Auflagerfuge (13) zwischen diesen beiden hohlen Teilen (10, 12) und zwei Befestigungsglieder (14, 16) aufweist, die gesondert an jedem entsprechenden hohlen Teil (10, 12) in der Weise befestigt sind, daß dann, wenn die hohlen Teil (10, 12) in der Auflagerfuge (13) aufeinanderliegen, die hohlen Teile (10, 12) im wesentlichen durch die Befestigungsglieder (14, 16) zusammengehalten und die hohlen Teile (10, 12) nur durch Schwenken um eine Schwenkachse voneinander trennbar sind, dadurch gekennzeichnet, daß die Befestigungsglieder (14, 16) eine U-förmige, an der Innenseite des Deckelteils (12) befestigte Federklammer (16) und ein mit einer Öffnung (24) versehener, an der Innenseite des Unterteils (10) befestigter Flansch (14) sind, wobei die Klammer (16) einen ersten, im wesentlichen geraden Schenkel (18) besitzt, mittels welchem die Klammer (16) benachbart und im wesentlichen senkrecht zur Auflagerfuge (13) am Deckelteil (12) befestigt ist, mit einem zweiten, in den hohlen Deckelteil (12) ragenden Schenkel (20), an dem ein für den Eintritt in die Öffnung (24) des Flansches (14) vorgesehener V-förmiger Abschnitt (30) ausgeformt ist, wobei der Flansch (14) im Unterteil (10) befestigt ist, daß er sich im wesentlichen senkrecht zur Auflagerfuge (13) in einer von dieser Fuge entfernten Position befindet, wodurch beim Zusammensetzen der beiden hohlen Teile der V-förmige Abschnitt (30) des zweiten Schenkels (20) unter Erzeugen einer Rest-Kraftwirkung zwischen den hohlen Teilen (10, 12) in die Öffnung (24) gepreßt wird, sodaß die hohlen Teile im wesentlichen zusammengehalten werden, wenn weitere Sicherungsmittel gegen ein Verschwenken der hohlen Teile (10, 12) gegeneinander vorgesehen sind, wobei diese Sicherungsmittel an der der Schwenkachse gegenüberliegenden Gehäuseseite angeordnet sind.

2. Gehäuse nach Anspruch 1, dadurch gekennzeichnet, daß der Flansch (14) abnehmbar ist und lösbar an einem der beiden hohlen Teile (10, 12) angebracht ist.

3. Gehäuse nach einem der vorhergehenden Ansprüche, dadurch gekennzeichnet, daß die Sicherungsmittel aus einer Mutter-Bolzen-Anordnung bestehen.

### Revendications

1. Enceinte comportant un élément creux formant base (10) et un élément creux formant couvercle (12), un joint d'aboutement entre ces deux éléments creux (10, 12), deux éléments de fixation (14, 16) étant attachés séparément à chaque élément creux correspondant (10, 12) de manière que, lorsque ces éléments creux (10, 12) sont en contact par l'intermédiaire du joint d'aboutement (13), ils sont effectivement maintenus ensemble par les éléments de fixation (14, 16) et ils ne peuvent être séparés que par pivotement autour d'un axe de pivotement, caractérisée en ce que les éléments de fixation (14, 16) sont constitués par une pince à ressort (16) présentant le forme d'un U modifié et attachée à l'intérieur de l'élément formant couvercle (12), et par un rebord (14) comportant un orifice (24) et attaché à l'intérieur de l'élément de base (10), la pince (16) comportant une première branche essentiellement droite (18) par laquelle cette pince (16) est attachée à l'élément formant couvercle (12) de manière à se situer près du joint d'aboutement (13) et essentiellement perpendiculairement à celui-ci, et un seconde branche (20) s'étendant à l'intérieur de l'élément creux formant couvercle (12), la seconde branche (20) comportant une partie en forme de V (30) destinée à pénétrer dans l'orifice (24) du rebord (14), ce rebord (14) est fixé à l'élément de base (10) de manière à être essentiellement perpendiculaire au joint d'aboutement (13) et à se trouver dans une position décalée par rapport à ce joint, de sorte que, lors de l'assemblage des deux éléments creux, la partie en forme de V (30) de la seconde branche (20) est introduite de force dans l'orifice (24), ce qui donne une réaction de force résiduelle entre les éléments creux (10, 12), de sorte que ces éléments creux sont effectivement maintenus ensemble lorsque d'autres moyens de fixation sont prévus pour empêcher un pivotement des éléments creux (10, 12), ces moyens de fixation étant agencés du côté de l'enceinte, qui est opposé à l'axe de pivotement.

2. Enceinte suivant la revendication 1, caractérisée en ce que le rebord (14) est détachable et est monté de façon amovible par rapport à l'un des deux éléments creux (10, 12).

3. Enceinte suivant l'une ou l'autre des revendications précédentes, caractérisée en ce que les moyens de fixation comprennent un assemblage à écrou et boulon.

FIG.1.

FIG.2.

FIG. 3.